# EUROPÄISCHE PATENTSCHRIFT

(11) **EP 1 589 602 B1**
(45) Veröffentlichungstag und Bekanntmachung des Hinweises auf die Patenterteilung: **08.03.2017**
(21) Anmeldenummer: 04008992.2
(22) Anmeldetag: 15.04.2004
(51) Int. Cl.: H01M 8/24, H01M 2/20

(54) **Kontaktfederblech und elektrochemische Batterie mit einem derartigen Kontaktfederblech**
Contact spring sheet and electrical battery containing same
Ressort de contact et pile eléctrique le contenant

(43) Veröffentlichungstag der Anmeldung: 26.10.2005
(73) Patentinhaber: Siemens Aktiengesellschaft, 80333 München (DE)
(72) Erfinder: Mattejat, Arno, Dr., 91088 Bubenreuth (DE); Schreiber, Aloisia, 91056 Erlangen (DE)

(56) Entgegenhaltungen:
- WO-A-02/49163
- WO-A-97/36344
- WO-A1-2004/109838
- US-A- 3 982 221
- US-A- 5 472 801
- PATENT ABSTRACTS OF JAPAN Bd. 0140, Nr. 70 (E-0886), 8. Februar 1990 (1990-02-08) & JP 1 289072 A (SANYO ELECTRIC CO LTD), 21. November 1989 (1989-11-21)

## Beschreibung

Die Erfindung betrifft ein Kontaktfederblech zur Stromübertragung zwischen zwei Bauteilen einer elektrochemischen Batterie, wobei das Kontaktfederblech ein Blech mit einer Anzahl von aus der Blechebene herausgebogenen Federzungen aufweist. Ein derartiges Kontaktfederblech ist beispielsweise aus der EP 0 591 800 B1 bekannt.

Elektrochemische Batterien, wie beispielsweise Brennstoffzellen-Batterien oder Elektrolysezellen-Batterien, bestehen oftmals aus einer Vielzahl aufeinander gestapelter Bauteile wie z.B. Elektrolyt-Elektrodeneinheiten, Bipolarplatten, Kühlkarten, Polplatten, Druckkissen etc. Um einen Stromfluss durch diesen Stapel zu gewährleisten, müssen die Oberflächen der Bauteile in Stapelrichtung elektrisch miteinander kontaktiert werden. Der Strom soll hierbei möglichst verlustfrei und damit auf kürzestem Weg durch den Stapel hindurchgeführt werden.

Die gleichmäßige elektrische Kontaktierung zwischen zwei benachbarten Bauteilen bereitet allerdings dann Probleme, wenn der Abstand zwischen diesen Bauteilen variabel ist. Ein solcher Fall liegt z.B. bei Druckkissen vor, die in Brennstoffzellenbatterien im Abstand einiger Brennstoffzellen innerhalb des Zellenstapels angeordnet werden. Diese Druckkissen werden mit einem in der Regel elektrisch isolierenden Druckmedium versorgt und weisen einen variablen Abstand ihrer Begrenzungen auf.

Ein solches Druckkissen kann beispielsweise dadurch aufgebaut werden, dass zwischen zwei benachbarten Kühlkarten oder einer Kühlkarte und einer Polplatte eines Brennstoffzellenstapels ein Hohlraum vorgesehen wird, der mit einem Druckmedium beaufschlagt wird. In Abhängigkeit von der Druckbeaufschlagung und der Toleranzen der Bauteile stellt sich zwischen den beiden Kühlkarten-Oberflächen bzw. der Polplatten- und der Kühlkarten-Oberfläche ein bestimmter Abstand ein.

Um den Stromfluss durch den Stapel zu gewährleisten, müssen diese Oberflächen elektrisch miteinander kontaktiert werden, da das Druckmedium hierzu nicht in der Lage ist. Ein Bauteil zur Kontaktierung der Oberflächen dieser Bauteile muss deshalb in Stapelrichtung in seiner geometrischen Ausdehnung variabel sein und eine hohe Kontaktzahl pro Flächeneinheit aufweisen. Vorteilhaft ist, wenn es einen großen Arbeitsweg überdecken kann, denn dann kann die Anzahl von Druckkissen in einem Brennstoffzellenstapel niedrig gehalten werden.

Die EP 0 591 800 B1 offenbart eine Brennstoffzellenbatterie, bei der zur Stromübertragung zwischen einer Elektrolyt-Elektroden-Einheit und einer benachbarten Kühlkarte bzw. einem benachbarten Druckkissen ein Kontaktfederblech angeordnet ist. Das Kontaktfederblech weist ein ebenes, eine Elektrode der Elektrolyt-Elektroden-Einheit elektrisch kontaktierendes Blech und aus der Blechebene herausgebogene Federzungen auf, deren Spitzen die Kühlkarte elektrisch kontaktieren.

Die Federzungen sind hierbei mit einem scharfen Knick aus der Blechebene herausgebogen und schließen mit der Kühlkarte einen spitzen Winkel ein. Werden diese Federzungen zwischen den beiden anliegenden Batteriebauteilen zusammengedrückt, dann verbiegen sich die Zungen. Unter dieser mechanischen Belastung entstehen an Fußpunkten der Federzungen in der Blechebene, d.h. in dem Bereich, in dem die Federzungen die Blechebene verlassen, sehr hohe Biegespannungen. Wird eine maximal zulässige Spannung überschritten, verformt sich diese Stelle plastisch und irreversibel, so dass die Federeigenschaften beeinträchtigt werden. Die Federzungen bzw. das Kontaktfederblech können daher nur einen begrenzten Weg zusammengedrückt werden bzw. die Höhe, die die Federn hochgebogen werden können, wird von den Spannungsverhältnissen begrenzt.

Die Biegespannungen führen zudem zu einer Verbiegung der Stege zwischen den Zungen in der Blechebene. Um solche Verbiegungen zu vermeiden, müssen die Stege zwischen den Federzungen relativ breit ausgeführt werden und liegen beispielsweise in der Größe der Länge der Federzungen. Hierdurch werden zum einen die Federeigenschaften des Kontaktfederblechs und zum anderen die Anzahl der Federzungen und somit die Kontaktzahl pro Flächeneinheit beschränkt.

Es ist deshalb Aufgabe vorliegender Erfindung, ein Kontaktfederblech anzugeben, welches aufgrund guter Federeigenschaften einen großen Abstandsausgleich zwischen zwei variabel voneinander beabstandeten Bauteilen ermöglicht und gleichzeitig eine hohe Kontaktzahl pro Flächeneinheit aufweist.

Diese Aufgabe wird erfindungsgemäß durch die Lehre des Patentanspruchs 1 gelöst. Eine elektrochemische Batterie mit zwei Batteriebauteilen und zumindest einem zwischen diesen beiden Batteriebauteilen angeordneten derartigen Kontaktfederblech zur Stromübertragung zwischen diesen beiden Bauteilen ist Gegenstand des Patentanspruchs 11. Vorteilhafte Ausgestaltungen der Erfindung sind jeweils Gegenstand der Unteransprüche.

Durch das erfindungsgemäße zumindest teilweise gegenseitige Aufheben der in der Blechebene erzeugten Biegemomente kann eine Verdrehung des Verbindungssteges zwischen den beiden Federzungen weitgehend vermieden und der Verbindungssteg zwischen den zwei Federzungen somit klein gehalten werden. Hierdurch kann eine hohe Anzahl von Federzungen in der Blechebene angeordnet werden. Dies ermöglicht eine hohe Kontaktzahl des Kontaktfederbleches und im Ergebnis kurze Wege für eine möglichst verlustfreie Stromführung durch die Batterie. Die Stege zwischen den Federzungen müssen nur so breit sein, wie es zur Handhabung erforderlich ist. Sie sind nicht mehr zur Aufrechterhaltung eines Gegenmoments notwendig. Damit kann nahezu die gesamte zur Verfügung stehende Fläche zum Stromtransport benutzt werden. Zusätzlich führen kleinere Verbindungsstege zu einer Verbesserung der Federeigenschaften des Kontaktfederblechs.

Gleichzeitig können aufgrund der reduzierten Biegemomente die Biegespannungen an den Fußpunkten der Federzungen reduziert werden und somit plastische und irreversible Verformungen vermieden werden. Somit kann die Höhe, die die Federn hochgebogen werden können und somit auch der Federweg des Kontaktfederblechs vergrößert werden. Die sich aufgrund ausbleibender Verbiegung der Stege ergebende glatte Auflagefläche des Blechs ermöglicht eine leichte Montierbarkeit. Das Kontaktfederblech kann eben auf ein Batteriebauteil gelegt und dort ausgerichtet fixiert werden. Bei einer nachfolgenden Stapelung darüber liegender Bauteile verschiebt es sich dann nicht mehr.

Eine zumindest teilweise, im besten Fall vollständige, gegenseitige Aufhebung der in der Blechebene erzeugten Biegemomente ist dadurch möglich, dass die beiden Federzungen eine bezüglich einer senkrecht zu der Blechebene verlaufenden Achse achsensymmetrische Anordnung und/oder Form aufweisen.

Erfindungsgemäß weisen die beiden Federzungen hierbei jeweils eine Bogenform auf.

Wenn die Bogenform eine Kreisbogenform ist, dann verlagern sich die Angriffspunkte der Kräfte an den Zungenspitzen um so mehr auseinander, je mehr die Federn in Richtung senkrecht zu der Blechebene gedrückt werden. Ab einer bestimmten Kraft berühren die beiden Federzungen das Blech. Mit zunehmender Kraft wandern diese Berührungspunkte auseinander. Durch die Verkürzung der Hebelarme führt dies zu einer gleichmäßigeren Verteilung der Biegespannung und zu niedrigen Spannungen am Fuß der Federzungen. Gleichzeitig wird der Weg des Stroms durch die Feder verkürzt und damit der elektrische Widerstand herabgesetzt.

Gemäß einer besonders vorteilhaften Ausgestaltung der Erfindung ist die Bogenform eine Parabelbogenform. Wird eine gerade Zunge an ihrer Spitze belastet, dann folgt die Biegelinie der Federzunge einer Parabel. Wird genau diese Parabelform der Feder verliehen, dann wird sie bei maximaler Belastung gerade sein, ohne dass sie sich plastisch verformt. Es kann somit ein Maximum an Federweg erreicht werden. Im Gegensatz zur Kreisbogenform der Feder bleibt der Angriffspunkt der Kräfte am Fuß der Federzungen unverändert. Der elektrische Widerstand eines solchen Kontaktfederblechs ist unverändert und nicht abhängig vom Weg, den es zusammengedrückt wird.

Die Erfindung sowie weitere vorteilhafte Ausgestaltungen der Erfindung gemäß den Merkmalen der Unteransprüche werden im folgenden anhand von Ausführungsbeispielen in den Zeichnungen näher erläutert. Einander entsprechende Teile sind hierbei mit gleichen Bezugszeichen versehen. Es zeigen:
- FIG 1: ein aus dem Stand der Technik bekanntes Kontaktfederblech in Seitenansicht in vereinfachter Darstellung,
- FIG 2: eine erste Ausführungsform eines erfindungsgemäßen Kontaktfederblechs in Seitenansicht,
- FIG 3: eine zweite Ausführungsform eines erfindungsgemäßen Kontaktfederblechs in Seitenansicht,
- FIG 4: einen Zuschnitt eines Blechs zur Herstellung eines erfindungsgemäßen Kontaktfederblechs in Draufsicht,
- FIG 5: ein zwischen zwei plattenförmigen Bauteilen zusammengepresstes Kontaktfederblech,
- FIG 6: die Kraftverteilung bei Federzungen mit Kreisbogenform unter dem Einfluss unterschiedlicher Kräfte,
- FIG 7: ein Kontaktfederblech mit Sicken an Fußpunkten der Federzungen in Seitenansicht,
- FIG 8: ein Kontaktfederblech mit Sicken an Fußpunkten in Draufsicht,
- FIG 9: ein in einen Rahmen eingefasstes Kontaktfederblech in Seitenansicht,
- FIG 10: ein Kontaktfederblech mit beidseitig aus der Blechebene herausgebogenen Federzungen in Seitenansicht,
- FIG 11: zwei an ihren ebenen Blechen aneinanderliegende Kontaktfederbleche in Seitenansicht,
- FIG 12: einen Längsschnitt einer Brennstoffzellenbatterie mit Kontaktfederblechen zur Stromübertragung zwischen Batteriebauteilen.

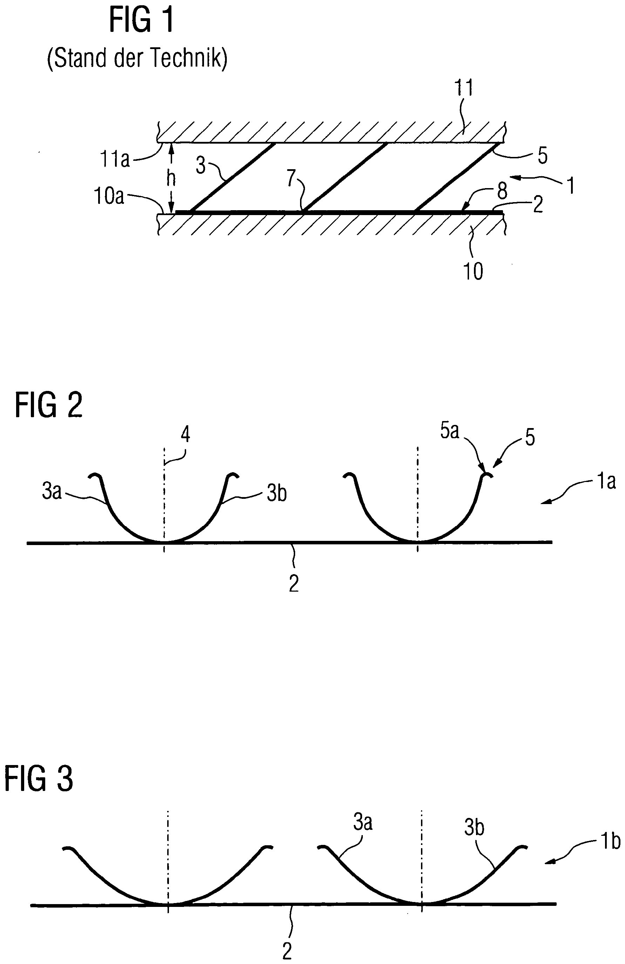

Figur 1 zeigt in vereinfachter Darstellung ein aus dem Stand der Technik bekanntes Kontaktfederblech 1 zur Stromübertragung zwischen zwei Bauteilen 10 und 11 einer elektrochemischen Batterie. Die Stromübertragung erfolgt hierbei über im wesentlichen ebene, parallel zueinander angeordnete und variabel beabstandete Oberflächen (bzw. Begrenzungen) 10a, 11a der Bauteile 10 bzw. 11. Bei den Bauteilen 10,11 handelt es sich beispielsweise um planare Brennstoffzellenbauteile wie z.B. Kühlkarten.

Das Kontaktfederblech 1 weist ein ebenes, das Bauteil 10 elektrisch kontaktierendes Blech 2 und eine Anzahl aus der Blechebene 8 herausgebogener Federzungen 3 auf, deren Zungenspitzen 5 die Oberfläche 11a des Bauteils 11 elektrisch kontaktieren. Die Federzungen 3 sind mit einem scharfen Knick aus der Blechebene 8 herausgebogen und stehen gerade mit einem gleichmäßigen Winkel in die Höhe. Die Höhe h, die die Federzungen 3 hochgebogen werden können, und somit der überbrückbare Federweg bzw. Arbeitsweg, sowie die Abstände zwischen den Federzungen und somit die Kontaktzahl pro Flächeneinheit wird von den Spannungsverhältnissen in den Fußpunkten 7 der Federzungen 3 begrenzt.

Figur 2 zeigt ein erstes Ausführungsbeispiel eines erfindungsgemäßen Kontaktfederblechs 1a in Seitenansicht. Jeweils zwei Federzungen 3a, 3b sind derart angeordnet und geformt, dass sich unter Krafteinwirkung auf die Zungenspitzen 5 in eine Richtung senkrecht zu der Blechebene 8 die jeweils in der Blechebene 8 erzeugten Biegemomente zumindest teilweise gegenseitig aufheben. Die zwei Federzungen 3a, 3b weisen hierzu eine bezüglich einer senkrecht zu der Blechebene 8 verlaufenden Achse 4 achsensymmetrische Anordnung und Form auf. Im dargestellten Ausführungsbeispiel weisen die Federzungen 3a,3b jeweils eine Kreisbogenform auf, d.h. dass der Bogen einem Ausschnitt aus einem Kreisbogen folgt. Wenn das Kontaktfederblech zwischen zwei Bauteilen zusammengepresst wird, dann gleiten die Enden 5 der Federzungen 3a,3b über die Oberfläche des Bauteils, an dem sie anliegen. Um zu verhindern, dass sie dort infolge möglicherweise eigener scharfen Kanten oder an Oberflächenstrukturen oder Unebenheiten des zu kontaktierenden Bauteils verkanten, sind die Zungenspitzen 5 mit einem Biegeradius 5a abgebogen.

Ein in Figur 3 gezeigtes zweites Ausführungsbeispiel eines erfindungsgemäßen Kontaktfederblechs 1b weist Federzungen 3a, 3b mit jeweils einer Parabelbogenform statt mit einer Kreisbogenform auf.

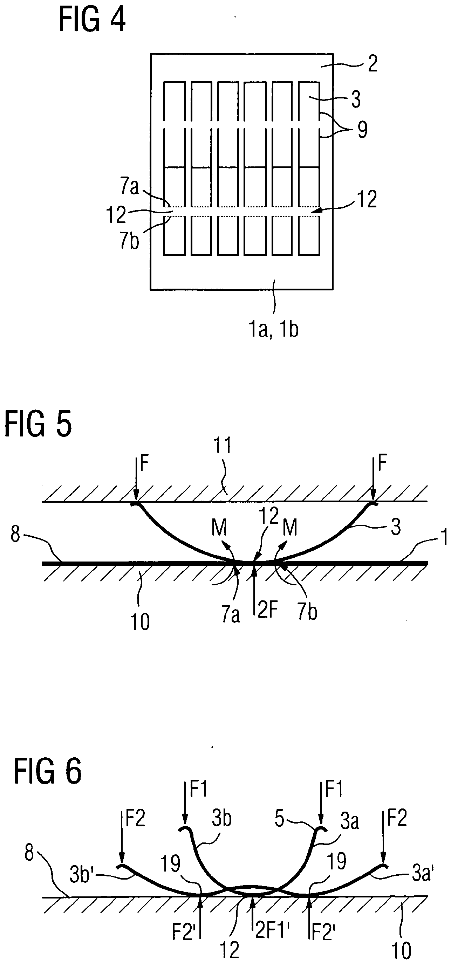

Wie in Figur 4 dargestellt, können die Kontaktfederbleche 1a und 1b z.B. dadurch hergestellt werden, dass aus einem ebenen Blech 2 durch U bzw. H-förmige Schnitte 9 gleich lange Zungen 3 herausgeschnitten werden. Die strichliert angedeuteten Fußpunkte bzw. Fußlinien 7a,7b der Federzungen liegen dann einander gegenüber, ebenso die Zungenenden. Die schmalen Verbindungsstege 12, die sich zwischen den Fußlinien der Federzungen befinden, stabilisieren das Blech 2 für die weiteren Bearbeitungsschritte sowie für die Montage und den Einbau in eine elektrochemische Batterie.

In einem zweiten Arbeitsschritt können die Federzungen 3 z.B. in eine Kreisbogen- oder Parabelbogenform gebogen werden. Anschließend können die Zungenspitzen mit einem kleinen Radius abgebogen werden.

Das Blech 2 besteht bevorzugt aus einem gut leitenden Material, z.B. einer Kupferlegierung. Die Oberfläche ist zudem zumindest teilweise mit einer elektrisch gut leitfähigen Oberflächenbeschichtung versehen, z.B. einer Goldschicht, die einen geringen elektrischen Übergangswiderstand gewährleistet.

Bevorzugt weisen zumindest die Kontaktstellen zu den zu kontaktierenden Batteriebauteilen diese gut leitfähige Oberflächenbeschichtung auf. Der Widerstand ist dann zwar noch vom Kontaktdruck abhängig, jedoch auf einem sehr niedrigen Niveau, das sich nicht stark am Gesamtwiderstand bemerkbar macht.

Figur 5 zeigt, wie sich Federzungen 3a,3b verbiegen, wenn ein Kontaktfederblech 1 zwischen ebene und zueinander parallel beabstandete Oberflächen zweier Bauteile 10 und 11 gelegt und zusammengedrückt wird. Das Bauteil 11 übt auf die Spitzen der Federzungen 3a,3b jeweils eine Kraft F aus, während von Seite des Bauteils 10 eine Gegenkraft in Höhe von 2F auf das Blech 2 ausgeübt wird. Durch die Anordnung und Form der Federzungen 3 gleichen sich an den Fußpunkten 7a,7b der Federzungen 3a,3b die durch die Federverbiegung entstehenden Biegemomente M aus. Dadurch entsteht in der Blechebene 8 kein Drehmoment, das den Verbindungssteg 12 zwischen den beiden Federzungen 3a,3b verdrehen würde. Die Blechebene 8 bleibt damit weitgehend an ihrem ursprünglichen Ort und verändert nicht ihre Lage, auch wenn die Federzungen 3a,3b ganz flach gedrückt werden.

Figur 6 zeigt, wie sich bei Federzungen mit Kreisbogenform die Angriffspunkte der Kräfte um so mehr auseinander verlagern, je mehr die Federn zusammengedrückt werden. Bei nicht zusammengedrückten Federzungen 3a,3b wirken jeweils die Kräfte F1 auf die Zungenspitzen 5 in einer Richtung senkrecht zu der Blechebene 8. Im Verbindungssteg 12 zwischen den Fußpunkten 7a,7b der Federzungen 3a, 3b wirkt deshalb eine Gegenkraft 2F1'. Mit 3a' bzw. 3b' ist die Form der Federzungen 3a bzw. 3b im zusammengedrückten Zustand bezeichnet. Durch das Zusammendrücken wirkt auf die Spitzen 5 der Federzungen jeweils eine in Richtung senkrecht zu der Blechebene gerichtete Kraft F2 mit F2 > F1. Die Federzungen 3a', 3b' werden durch diese Kraft derart gebogen, dass es an den Kontaktierungsstellen 19 zu einer Berührung des Bleches 2 kommt.

Mit zunehmender Kraft F2 werden die Federzungen 3a', 3b' zunehmend zusammengedrückt und somit zunehmend verbogen. Durch die zunehmende Verbiegung der Federzungen 3a', 3b' wandern die Kontaktierungsstellen 19 auseinander und es verlagern sich damit auch die Angriffspunkte der Gegenkräfte F2' um so mehr auseinander, je mehr die Federzungen 3 zusammengedrückt werden. Durch die Verkürzung der Hebelarme führt dies zu einer gleichmäßigeren Verteilung der Biegespannung und zu niedrigeren Spannungen am Fuß der Federzungen. Bei einer Kontaktierung der Federzungen 3a', 3b' mit dem an dem Blech 2 anliegenden Bauteil 10 an den Kontaktierungsstellen 19 wird gleichzeitig der Weg des Strom durch die Feder verkürzt und damit der elektrische Widerstand herabgesetzt.

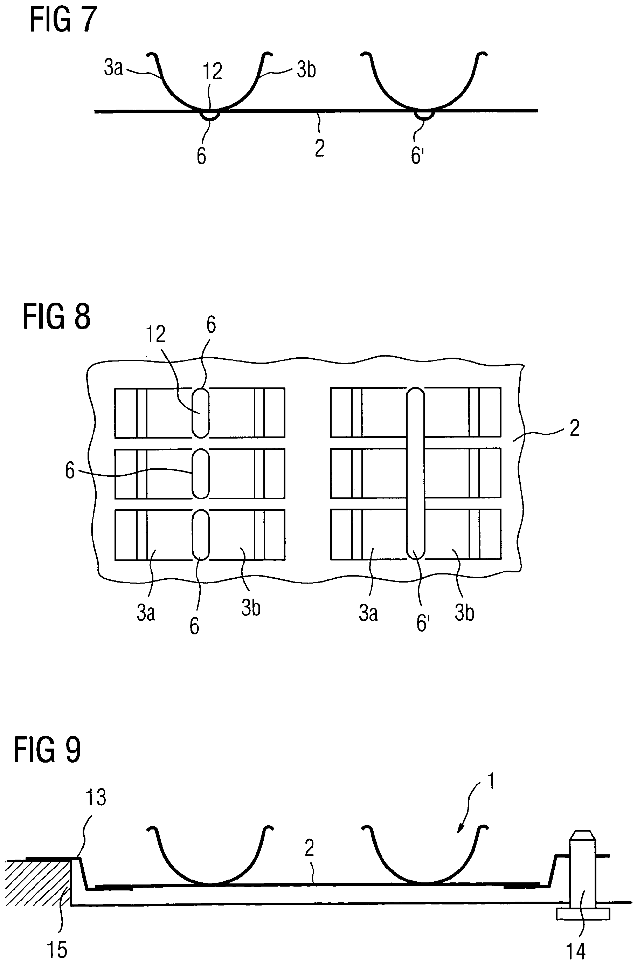

Der Verbindungssteg 12 zwischen den zwei Federzungen 3a,3b kann glatt sein, er kann aber auch, wie in Figur 7 in Seitenansicht und in FIG 8 in Draufsicht gezeigt, an seiner den Federzungen abgewandten Seite eine Ausformung oder Sicke 6 bzw. 6' aufweisen, um an definierten Stellen eine Kontaktfläche zu bilden. Eine solche Sicke kann z.B. in das Blech 2 geprägt werden.

Wenn sich die Sicke über die Verbindungsstege von mindestens zwei Federzungenpaaren erstreckt, deren jeweilige Federzungen hinsichtlich der erzeugten Biegemomente zusammenwirken, dann kann das Blech in Sickenrichtung zusätzlich versteift werden. Dies kann zu einer besseren Handhabung des Blechs führen, ist allerdings mit einer geringeren Flexibilität bei der Kontakterzeugung verbunden.

Wie die in FIG 8 gezeigte Draufsicht auf das in FIG 7 in Seitenansicht gezeigte Kontaktfederblech zeigt, erstreckt sich im Fall a) eine Sicke 6 nur über den Verbindungssteg 12 jeweils eines Federzungenpaares 3a,3b, während sich im Fall b) die Sicke 6' über die Verbindungsstege von drei Federzungenpaaren erstreckt.

Zur einfachen Montierbarkeit kann das Kontaktfederblech 1 gemäß Figur 9, insbesondere in einem Bereich, in dem es keinen Strom transportieren muss, von einem Rahmen 13 eingefasst sein. Dieser kann aus demselben Werkstoff oder aus einem anderen Material, bevorzugt aus einem Dichtmaterial, insbesondere aus einem elastischen Material, bestehen. Ein solcher Rahmen bietet die Möglichkeit, dass er an Kanten, Stiften oder anderen geometrischen Elementen ausgerichtet werden kann, die Möglichkeit, die Fixierung aus der den Strom tragenden Fläche herauszunehmen. Es wird dann eine Trennung der Funktionen erreicht, die sich in der Regel günstig auf die Zuverlässigkeit der Konstruktion auswirkt. Beispielhaft ist in FIG 9 eine Stiftzentrierung 14 und eine Kantenzentrierung 15 angedeutet.

Auf diese Weise ist es auch möglich, das Kontaktfederblech in ein anderes Bauteil zu versenken. Der Rahmen kann auch genutzt werden, um eine Maßabstimmung zwischen angrenzenden Bauelementen zu erzielen. Über die Gestaltung des Rahmens kann somit eine leichte Adaption an den Einbauort erfolgen.

Bei gleicher Kontaktzahl pro Flächeneinheit, gleichem Material und gleichen Blechstärken erlaubt ein erfindungsgemäßes Kontaktfederblech einen im Vergleich zum Stand der Technik wesentlichen größeren Federweg und gleichzeitige höheren Anpressdruck der Kontaktfedern auf einer zu kontaktierenden Oberfläche. Während ein aus dem Stand der Technik bekanntes Kontaktfederblech mit Federzungen, die mit einem scharfen Knick aus der Blechebene herausgebogen sind, bei Verwendung von CuBe und einer Blechstärke von 0.2 mm z.B. nur eine Federhöhe von 2 mm im nicht zusammengedrückten Zustand erlaubt, wobei die Federzungen ohne plastische Verformung nur um ca. 1 mm auf eine Höhe von 1 mm zusammengedrückt werden können, kann ein erfindungsgemäßes Kontaktfederblechen bei gleicher Kontaktzahl, Blechstärke und Material mit einer Federhöhe von 5 mm (nicht zusammengedrückt) ausgeführt werden kann, wobei die Federzungen ohne wesentliche plastische Verformung bis zu einer Federhöhe von 0.5 mm zusammengedrückt werden können, so dass ein Federweg von 4.5 mm überbrückbar ist.

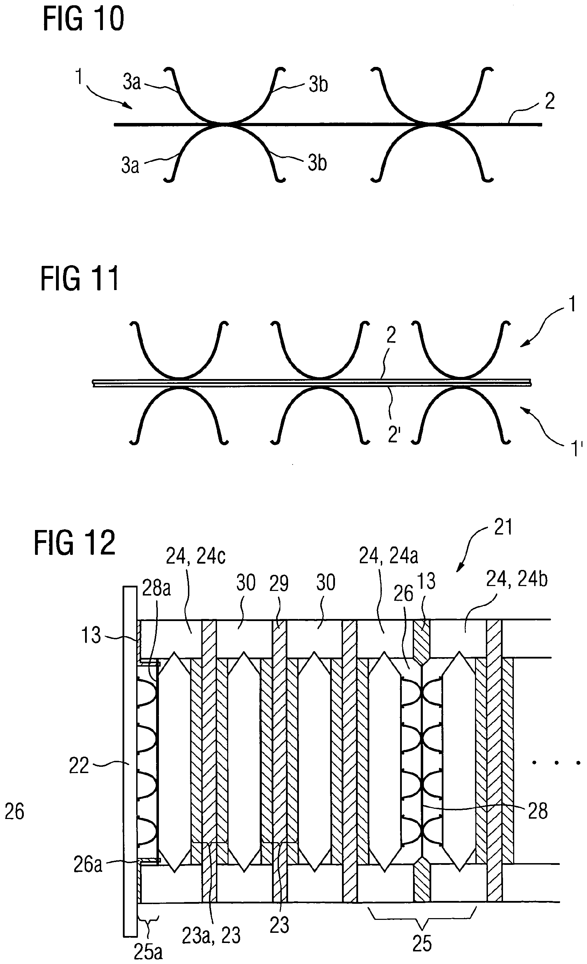

Durch beidseitiges Herausbiegen von Federzungen 3a,3b aus der Blechebene 2 (siehe Figur 10) kann der Überbrückungsweg verdoppelt werden. Alternativ können gemäß Figur 11 auch zwei Kontaktfederbleche 1,1'an ihren Blechen 2,2' aneinandergelegt werden und somit der Überbrückungsweg verdoppelt werden. Solche Bauteile sind auch weiterhin gut montierbar, denn beim Zusammendrücken gleiten die Federzungen in zwei entgegengesetzte Richtungen. Die Schiebekräfte, die dabei entstehen, sind gleich groß, aber entgegengesetzt. Die Bauteile bleiben daher weitgehend in ihrer Lage.

Das erfindungsgemäße Kontaktfederblech eignet sich besonders zur Stromübertragung zwischen zueinander parallel angeordneten, plattenförmigen bzw. planaren Bauteilen von elektrochemischen Batterien, insbesondere Brennstoffzellen-Batterien, sowie Elektrolysezellen-Batterien. Figur 12 zeigt ausschnittsweise in vereinfachter Darstellung einen Längsschnitt eines Teils einer Brennstoffzellen-Batterie 21. Die Batterie 21 umfasst eine erste Polplatte 22, eine von dieser parallel beabstandete, nicht dargestellte zweite Polplatte, sowie eine Anzahl zwischen diesen angeordneter Elektrolyt-Elektrodeneinheiten 23. Zwischen zwei der Elektrolyt-Elektrodeneinheiten 23, welche auch als Membran-Elektrodeneinheiten (MEA) bezeichnet werden und jeweils Kohlepapiere, Katalysatorschichten und eine Membran umfassen, sowie zwischen einer außenliegenden Elektolyt-Elektrodeneinheit 23 und der benachbarten Polplatte 22 ist jeweils eine Kühlkarte 24 angeordnet. Unter einer Kühlkarte wird jede Art einer verschweißten oder sonstwie gebildeten Platte verstanden, die einen Hohlraum für ein Kühlmedium bildet. Beispielsweise handelt es sich um Doppelplatten, die aufeinander liegen, entlang der Kanten miteinander abdichtend aneinandergefügt und von einem Rahmen eingefasst sind. Die Kühlkarten können Öffnungen zur Aufnahme und Abgabe von Kühlmedium enthalten. Typischerweise fungieren Kühlkarten in einem Brennstoffzellenstapel auch gleichzeitig als Bipolarplatten.

Die Kühlkarten 24 sind aus dünnen, von ihrer Materialstärke und geometrischen Struktur her leicht verformbaren Blechen gebildet und passen sich Höhenunterschieden der benachbarten Bauteile, d.h. der Membran-Elektrodeneinheiten 23 einschließlich nicht näher dargestellter Gasräume bzw. der Polplatten 22, leicht an.

Aus der Batterie 21 ist eine der Elektrolyt-Elektroden-einheiten 23 aus dem Stapel entfernt, so dass an dieser Stelle ein Hohlraum 26 gebildet ist. Durch Druckbeaufschlagung dieses Hohlraums 26 mit einem beliebigen Medium ist ein Druckkissen 25 gebildet worden. Der Druck in dem Hohlraum 26 ist größer als die Drücke in den benachbarten Gas- und Kühlwasserräumen, so dass der Hohlraum 26 auseinander und die angrenzenden Räume zusammengedrückt werden. Ein Druckkissen 25a mit lediglich einer Kühlkarte 24c, ansonsten jedoch analogem Aufbau, grenzt direkt an die Polplatte 22.

Die in dem Hohlraum 26 gegenüberliegenden Kühlplatten 24a und 24b weisen somit einen zueinander variablen Abstand auf, welcher abhängig ist von den Toleranzen der Bauteile, die zwischen den Druckkissen angeordnet sind, den Federeigenschaften dieser Bauteile, sofern sie durch Druck verformbar sind, und der Höhe des Drucks, den das Medium im Druckkissen 25 ausübt. Entsprechendes gilt für den Abstand der Kühlplatte 24c zu der Polplatte 22.

Zur Übertragung des Stroms zwischen den Kühlkarten 24a und 24b ist in dem Hohlraum 26 ein Kontaktfederblech 28 mit beidseitig aus der Blechebene herausgebogenen Federzungen angeordnet, welches von einem Rahmen 13 eingefasst ist, der den Hohlraum 26 nach außen abdichtet. Der Rahmen kann hierzu aus einem elastischen Dichtungsmaterial bestehen. Falls die an dem Rahmen anliegenden Kühlkarten an den Berührungsstellen mit dem Rahmen 13 selbst bereits elastisches Dichtungsmaterial aufweisen, kann der Rahmen auch aus einem harten Material, bevorzugt aus einem Metall z.B. in Form einer Metallfolie, gefertigt sein.

Bevorzugt ist das Kontaktfederblech 28 von einem Rahmen 13 eingefasst, dessen äußere Form und/oder Abmessungen identisch sind mit denjenigen des Elektrolyt- bzw. Membran-Bauteils 29 der Batterie 21. In diesem Fall kann der Rahmen 13 genutzt werden, um eine Maßabstimmung zwischen Dichtelementen 30, die die Membran 29 dichten, auf dieselben Verhältnisse zu bringen. Der Druckraum 28 kann dann auf einfache Weise dadurch erzeugt werden, dass in dem Brennstoffzellenstapel eine Elektrolyt-Elektrodeneinheit 23 durch ein von einem Rahmen 13 eingefasstes Kontaktfederblech 28 ersetzt wird.

Im Fall des Druckraums 28a zwischen der Polplatte 22 und der Kühlkarte 24c ist zur Stromübertragung zwischen diesen beiden Bauteilen ein Kontaktfederblech 28a mit nur auf einer Seite aus der Blechebene herausgebogenen Federzungen vorgesehen. Das Kontaktfederblech 28a kontaktiert zum einen mit seinem Blech die Kühlkarte 24 und zum anderen mit seinen Federzungen die Polplatte 22.

Über die Gestaltung des Rahmens 13 ist eine leichte Adaption eines Kontaktfederblechs an den Einbauort möglich. Zur Montage an glatten Polplatten kann beispielsweise ein glatter Rahmen vorgesehen sein, zur Montage im Inneren eines Brennstoffzellenstapels kann ein gestufter Rahmen vorgesehen werden. Durch die Form und Anordnung der Federn wird somit eine Konstruktion erreicht, die neben der Hauptaufgabe, den Strom zu transportieren, eine ganze Reihe von weiteren günstigen Eigenschaften aufweisen. Dadurch ist das Kontaktfederblech vielseitig einsetzbar und leicht montierbar.

## Patentansprüche

1. Kontaktfederblech (1,1a,1b) zur Stromübertragung zwischen zwei Bauteilen (10,11) einer elektrochemischen Batterie (21), wobei das Kontaktfederblech ein Blech (2) mit einer Anzahl von aus der Blechebene (8) herausgebogenen Federzungen (3) aufweist,
**dadurch gekennzeichnet, dass** zumindest zwei der Federzungen (3a,3b) derart angeordnet und/oder geformt sind, dass sich unter Krafteinwirkung auf die Zungenspitzen (5) in einer Richtung senkrecht zu der Blechebene (8) die von jeder der Federzungen (3a,3b) in der Blechebene (8) erzeugten Biegemomente (M) zumindest teilweise gegenseitig aufheben, wobei die beiden Federzungen (3a, 3b) eine bezüglich einer senkrecht zu der Blechebene (8) verlaufenden Achse (4) achsensymmetrische Anordnung und/oder Form aufweisen und wobei die beiden Federzungen (3a, 3b) jeweils eine Bogenform aufweisen.

2. Kontaktfederblech (1) nach Anspruch 1,
**dadurch gekennzeichnet, dass** die Bogenform eine Kreisbogenform ist.

3. Kontaktfederblech (1) nach Anspruch 1,
**dadurch gekennzeichnet, dass** die Bogenform eine Parabelbogenform ist.

4. Kontaktfederblech (1) nach einem der vorhergehenden Ansprüche, **dadurch gekennzeichnet, dass** die Zungenspitzen (5) abgebogen sind.

5. Kontaktfederblech (1) nach einem der vorhergehenden Ansprüche, **dadurch gekennzeichnet , dass** ein zwischen Fußpunkten (7a,7b) der beiden Federzungen (3a,3b) in der Blechebene (8) angeordneter Verbindungssteg (12) auf seiner den Federzungen (3a,3b) abgewandten Seite eine Sicke (6) aufweist.

6. Kontaktfederblech (1) nach Anspruch 5,
**dadurch gekennzeichnet, dass** sich die Sicke (6) über Verbindungsstege (12) von mindestens zwei Federzungenpaaren erstreckt, deren jeweilige Federzungen hinsichtlich der erzeugten Biegemomente zusammenwirken.

7. Kontaktfederblech (1) nach einem der vorhergehenden Ansprüche,
**dadurch gekennzeichnet, dass** die Oberfläche zumindest teilweise mit einer elektrisch gut leitfähigen Oberflächenbeschichtung versehen ist.

8. Kontaktfederblech (1) nach einem der vorhergehenden Ansprüche, **dadurch gekennzeichnet , dass** das Kontaktfederblech (1) von einem Rahmen (13) eingefasst ist.

9. Kontaktfederblech (1) nach Anspruch 8,
**dadurch gekennzeichnet, dass** der Rahmen (13) aus einem, vorzugsweise elastischen, Dichtmaterial gefertigt ist.

10. Kontaktfederblech (1) nach Anspruch 8,
**dadurch gekennzeichnet, dass** der Rahmen (13) aus einem Metall gefertigt ist.

11. Elektrochemische Batterie (21), insbesondere Brennstoffzellen-Batterie oder Elektrolysezellen-Batterie, mit zwei Batteriebauteilen (24a und 24b bzw. 22 und 24c) und zumindest einem zwischen diesen beiden Batteriebauteilen angeordnetem Kontaktfederblech (28 bzw. 28a) nach einem der Ansprüche 1 bis 10 zur Stromübertragung zwischen diesen beiden Batteriebauteilen.

12. Batterie (21) nach Anspruch 11,
**dadurch gekennzeichnet, dass** die beiden Batteriebauteile jeweils als Kühlkarte (24) ausgebildet sind.

13. Batterie (21) nach Anspruch 11,
**dadurch gekennzeichnet, dass** eines der beiden Bauteile als Kühlkarte (24) und das andere der beiden Bauteile als Polplatte (22) ausgebildet ist.

14. Batterie (21) nach Anspruch 11,
**dadurch gekennzeichnet, dass** das Kontaktfederblech (28) von einem Rahmen (13) eingefasst ist, dessen äußere Form und/oder äußeren Abmessungen identisch sind mit denjenigen eines Elektrolyt-Bauteils (29) der Batterie (21).

## Claims

1. Spring contact sheet ( 1, 1a, 1b ) for the transfer of current between two components (10, 11) of an electrochemical battery (21), the spring contact sheet having a sheet (2) with a number of spring tabs (3) bent out of the plane of the sheet ( 8 ),
**characterised in that** at least two of the spring tabs (3a, 3b) are arranged and/or formed such that the bending moments (M) generated by each of the spring tabs (3a, 3b) in the plane of the sheet (8), when a force acts on the tips of the tabs (5) in a direction perpendicular to the plane of the sheet (8), are at least partially mutually eliminated, wherein the two spring tabs (3a, 3b) have an arrangement and/or form that is symmetrical in respect of an axis (4) perpendicular to the plane of the sheet (8) and wherein the two spring tabs (3a, 3b) each have an arc shape.

2. Spring contact sheet (1) according to claim 1,
**characterised in that** the arc shape is a circular arc shape.

3. Spring contact sheet (1) according to claim 1,
**characterised in that** the arc shape is a parabolic arc shape.

4. Spring contact sheet (1) according to one of the preceding claims,
**characterised in that** the tips of the tabs (5) are bent.

5. Spring contact sheet (1) according to one of the preceding claims,
**characterised in that** a connecting ridge (12) arranged in the plane of the sheet (8) between base points (7a, 7b) of the two spring tabs (3a, 3b) have a bead (6) on the side facing away from the spring tabs (3a, 3b).

6. Spring contact sheet (1) according to claim 5,
**characterised in that** the bead (6) extends across the connecting ridges (12) of at least two pairs of spring tabs, the respective spring tabs of which interact in respect of the bending moments generated.

7. Spring contact sheet (1) according to one of the preceding claims,
**characterised in that** the surface is provided at least partially with a surface coating with good electrical conductivity.

8. Spring contact sheet (1) according to one of the preceding claims, **characterised in that** the spring contact sheet (1) is set in a frame (13).

9. Spring contact sheet (1) according to claim 8,
**characterised in that** the frame (13) is made of a preferably elastic sealing material.

10. Spring contact sheet (1) according to claim 8,
**characterised in that** the frame (13) is made of a metal.

11. Electrochemical battery (21), in particular a fuel cell battery or an electrolytic cell battery, with two battery components (24a and 24b or 22 and 24c) and at least one spring contact sheet (28 or 28a) according to one of claims 1 to 10 arranged between these two battery components for the transfer of current between these two battery components.

12. Battery (21) according to claim 11,
**characterised in that** the two battery components are each configured as cooling cards (24).

13. Battery (21) according to claim 11,
**characterised in that** one of the two components is configured as a cooling card (24) and the other of the two components is configured as a pole plate (22).

14. Battery (21) according to claim 11,
**characterised in that** the spring contact sheet (28) is set in a frame (13), the external form and/or external dimensions of which are identical to those of an electrolyte component (29) of the battery (21).

## Revendications

1. Tôle ( 1, 1a, 1b ) de ressort de contact pour transmettre du courant entre deux composants ( 10, 11 ) d'une batterie ( 21 ) électrochimique, dans laquelle la tôle de ressort de contact a une tôle ( 2 ) ayant un certain nombre de languettes ( 3 ) de ressort courbées en dehors du plan ( 8 ) de la tôle,
**caractérisé en ce qu'**au moins deux des languettes ( 3a, 3b ) de ressort sont disposées et/ou conformées de manière à ce que, sous l'effet d'une force sur les pointes ( 5 ) de languettes dans une direction perpendiculaire au plan ( 8 ) de la tôle, les couples ( M ) de flexion, produits dans le plan ( 8 ) de la tôle par chacune des languettes ( 3a, 3b ) de ressort, s'annulent mutuellement au moins en partie, les deux languettes ( 3a, 3b ) de ressort ayant un agencement et/ou une forme symétrique par rapport à un axe ( 4 ), s'étendant perpendiculairement au plan ( 8 ) de la tôle et les deux languettes ( 3a, 3b ) de ressort ayant respectivement une forme arquée.

2. Tôle ( 1 ) de ressort de contact suivant la revendication 1,
**caractérisée en ce que** la forme arquée est une forme en arc de cercle.

3. Tôle ( 1 ) de ressort de contact suivant la revendication 1,
**caractérisée en ce que** la forme arquée est une forme en arc de parabole.

4. Tôle ( 1 ) de ressort de contact suivant l'une des revendications précédentes,
**caractérisée en ce que** les pointes ( 5 ) des languettes sont recourbées.

5. Tôle ( 1 ) de ressort de contact suivant l'une des revendications précédentes,
**caractérisée en ce qu'**une barrette ( 12 ) de liaison, disposée dans le plan ( 8 ) de la tôle entre deux pieds ( 7a, 7b ) des deux languettes ( 3a, 3b ) de ressort, a une moulure ( 6 ) sur la face éloignée des languettes ( 3a, 3b ) de ressort.

6. Tôle ( 1 ) de ressort de contact suivant la revendication 5,
**caractérisée en ce que** la moulure ( 6 ) s'étend sur des barrettes ( 12 ) de liaison d'au moins deux paires de languettes de ressort, dont les languettes de ressort coopèrent du point de vue des couples de flexion produits.

7. Tôle ( 1 ) de ressort de contact suivant l'une des revendications précédentes,
**caractérisée en ce que** la surface est pourvue, au moins en partie, d'un revêtement de surface bon conducteur de l'électricité.

8. Tôle ( 1 ) de ressort de contact suivant l'une des revendications précédentes,
**caractérisée en ce que** la tôle ( 1 ) de ressort de contact est encadrée d'un cadre ( 13 ).

9. Tôle ( 1 ) de ressort de contact suivant la revendication 8,
**caractérisée en ce que** le cadre ( 13 ) est en un matériau d'étanchéité, de préférence élastique.

10. Tôle ( 1 ) de ressort de contact suivant la revendication 8,
**caractérisée en ce que** le cadre ( 13 ) est en un métal.

11. Batterie ( 21 ) électrochimique, notamment batterie de pile à combustible ou batterie de cellule d'électrolyse, ayant deux composants ( 24a et 24b ou 22 et 24c ) de batterie et au moins une tôle ( 28 et 28a ) de ressort de contact, disposée entre ces deux composants de batterie, suivant l'une des revendications 1 à 10, pour transmettre du courant entre ces deux composants de batterie.

12. Batterie ( 21 ) suivant la revendication 11,
**caractérisée en ce que** les deux composants de batterie sont constitués respectivement sous la forme d'une carte ( 24 ) de refroidissement.

13. Batterie ( 21 ) suivant la revendication 11,
**caractérisée en ce que** l'un des deux composants est constitué sous la forme d'une carte ( 24 ) de refroidissement et l'autre des deux composants, sous la forme d'une plaque ( 22 ) polaire.

14. Batterie ( 21 ) suivant la revendication 11,
**caractérisée en ce que** la tôle ( 28 ) de ressort de contact est encadrée d'un cadre ( 13 ) dont la forme extérieure et/ou dont les dimensions extérieures sont identiques à celles d'un composant ( 29 ) d'électrolyte de la batterie ( 21 ).
